# NOUVEAU FASCICULE DE BREVET EUROPEEN

(11) **EP 0 680 802 B2**
(45) Date de publication et mention de la décision concernant l'opposition: **19.03.2003**
(45) Mention de la délivrance du brevet: 08.10.1997
(21) Numéro de dépôt: 95401019.5
(22) Date de dépôt: 03.05.1995
(51) Int. Cl.: B23K 9/173, B23K 35/38

(54) **Mélange gazeux de protection et procédé de soudage à l'arc de pièces en aciers inoxydables**
Schutzgasgemisch und Verfahren zum Lichtbogenschweissen von Werkstücken aus rostfreiem Stahl
Protection gaseous mixture and process for arc welding of stainless steel workpieces

(30) Priorité: 04.05.1994 FR 9405473
(43) Date de publication de la demande: 08.11.1995
(73) Titulaire: L'air Liquide, S.A. à Directoire et Conseil de Surveillance pour l'Etude et l'Exploitation des Procédés Georges Claude, 75321 Paris Cedex 07 (FR)
(72) Inventeur: Rouault, Philippe, F-78300 Poissy (FR); Diot, Henry, F-95310 Saint Ouen l'Aumone (FR); Matile, Olivier, F-75018 Paris (FR)
(74) Mandataire: Le Moenner, Gabriel

(56) Documents cités:
- EP-A- 0 163 379
- DE-A- 1 465 027
- US-A- 4 973 822
- "Shielding gases for arc welding-part I" W. Lucas, Welding and Metal fabrication, June 1992, pages 218-225 and "Choosing a shielding gas-Part II, pages 269-276, July 1992

## Description

La présente invention concerne les mélanges gazeux de protection pour le soudage à l'arc d'aciers inoxydables, suivant les techniques de soudage à l'arc dites GMAW (Gas Metal Arc Welding) et FCAW (Flux Cored Arc Welding), plus particulièrement pour le soudage d'aciers inoxydables austéno-ferritiques contenant de l'azote dits duplex ou super-duplex.

Le document EP-A-163379 décrit un mélange gazeux pour le soudage à l'arc d'aciers inoxidables, comprenant un mélange d'hélium et d'argon, du dioxide de carbone, ainsi que de l'azote en un pourcentage de l'ordre de 2 à 25%. Le document "Shielding gases for are welding" W. Lucas, welding a Metal Fabrication, June 1992, part I, pages 218-225 and part II, pages 269-276, décrit des mélanges gazeux convenant pour le soudage d'aciers inoxydables, notamment un mélange M12 ternaire comportant 83% Ar, 15%He or 2% Co₂.

La présente invention a pour objet de proposer des mélanges gazeux de protection permettant d'améliorer le soudage des aciers inoxydables, en particulier de garantir de bonnes propriétés de résistance à la corrosion, d'augmenter la valeur de la charge à la rupture et de réduire les émissions nocives en offrant une large plage de réglages pour les différents régimes de soudage (transfert par pulvérisation axiale ou "spray arc", par court-circuit ou "short arc" ou par courant pulsé ou "pulsed arc").

Pour ce faire, selon une caractéristique de l'invention, le mélange gazeux comprend de 3 à 10 %, d'hélium, de 1 à 2 %, de dioxyde de carbone, de 1,3 à 2 %, d'azote, le solde étant essentiellement de l'argon.

Selon d'autres caractéristiques de l'invention :
- pour le soudage d'aciers inoxydables duplex, d'aciers austénitiques, ou d'aciers austénitiques à l'azote, le mélange comprend approximativement 5 % d'hélium, 1,8 % à 2 % de dioxyde de carbone, 1,5 à 1,7 % d'azote, le solde argon ;
- pour modifier la morphologie du cordon de soudure des aciers inoxydables austénitiques, le mélange gazeux comporte en outre une faible addition d'hydrogène.

La présente invention a également pour objet un procédé de soudage de pièce en acier inoxydable, comprenant les étapes de former un arc électrique entre une électrode consommable et la pièce, et de protéger l'arc par un mélange gazeux de protection tel que défini ci-dessus.

Les aciers inoxydables dits duplex et super-duplex présentent une excellente tenue à la corrosion par piqûre comparativement aux autres nuances d'aciers inoxydables en raison de leur micro-structure biphasée austénitique/ferritique, de leur teneur en azote et en autres éléments tels que le chrome ou le molybdène. Des exemples d'aciers de ce type sont décrits par exemple dans les documents US-A-4.816.085 et EP-A-545.753. Pour favoriser la formation d'austénite lors du soudage et donc augmenter la résistance mécanique à basse température, il a été proposé d'utiliser des électrodes consommables comportant des métaux d'apport sur-alliés en nickel mais qui ne permettent toutefois pas d'apporter suffisamment d'azote pour assurer une bonne résistance à la corrosion des soudures. Il a été envisagé en conséquence d'adjoindre des quantités relativement importantes, de l'ordre de 5 % d'azote dans le gaz de protection, en association avec de l'oxygène ou du dioxyde de carbone (voir p.ex. EP-A-163379), ce qui s'est toutefois traduit par des problèmes d'oxydation de cordon de soudure et de nombreuses porosités dues à une sur-saturation du cordon en azote.

Le mélange gazeux selon la présente invention présente un ensemble de caractéristiques avantageuses, notamment l'obtention d'un bon équilibre austénite-ferrite, une résistance à la corrosion améliorée, une excellente stabilisation de l'arc et une fluidité convenable du bain permettant des soudures dans différentes configurations, non seulement à plat et en verticale montante, mais également en corniche, ainsi que la quasi-disparition des projections. Le mélange gazeux selon l'invention s'applique aux procédés GMAW ou FCAW (avec fil fourré adapté) automatiques ou semi-automatiques grâce à la largesse offerte pour les plages de réglage selon les différents régimes de soudage. Il s'applique aux différentes nuances d'aciers inoxydables duplex ou super-duplex et couvre tant le soudage mono-passe que multi-passes. On trouvera ci-dessous dans le tableau A correspondant à des assemblages de tôles duplex et super-duplex de 12 mm d'épaisseur, bord à bord, avec un chanfrein de 60° en soudage GMAW multi-passes avec des intensités de 125 à 240 ampères et un gaz de soudage ayant la composition suivante : 5 % hélium, 2 % dioxyde de carbone, 1,5 % d'azote, le solde étant de l'argon.

**Tableau A**

| **Nuance** | **Duplex** | **Duplex** | **Duplex** | **Super- duplex** | **Super- duplex** | **Super- duplex** |
|---|---|---|---|---|---|---|
| Position | verticale montante | corniche | plat | verticale montante | corniche | plat |
| % ferrite (comptage manuel | 34 | 34 | 36 | 52 | 49 | 52 |
| Température de piqûre | 35 | 35 | 30 | 40 | 50 | 40 |

Le mélange gazeux selon l'invention permet d'autre part une augmentation des valeurs de charge à la rupture lors du soudage GMAW d'acier austénitique. Le tableau B ci-dessous montre la comparaison entre le soudage avec un mélange gazeux selon l'invention constitué de 5 % d'hélium, 1,8 % de dioxyde de carbone, 1,7 % d'azote, le solde étant de l'argon et un mélange gazeux classique ternaire de type M121 constitué de 18 % d'hélium, 1 % CO₂, solde argon sur des tôles de nuance 304L (ZCN1810) et 3161 (MZ19122LSI).

**Tableau B**

| | | |
|---|---|---|
| | | |
| Nuances du métal de base et du fil d'apport | Gaz de type M 121 | Argon, 5 % He, 1,8 % CO₂, 1,7 % N₂ |
| 304 L / 308 L | 555 / 409 / 73 / 47,2 | 590 / 420 / 65,2 / 39,8 |
| 316 L / 316 L | 560/430/69,8/41,2 | 605 / 458 / 68,6 / 37,4 |

Ces essais montrent une amélioration de l'ordre de 10 % de la valeur de la charge à la rupture.

Ainsi, le gaz selon l'invention permet d'autre part le soudage MIG des aciers austénitiques à l'azote (nuances avec le suffixe N) avec de simples fils de soudage austénitique (308/316) pour atteindre les minima de charge à la rupture imposées par la norme (NFA 35582), et ce sans se soucier de la dilution associée à la géométrie des pièces à souder.

Le mélange gazeux ci-dessus permet, par ailleurs, par une faible addition d'hydrogène, pouvant atteindre 2,5 %, typiquement inférieure à 2 %, de modifier la morphologie du cordon de soudure des aciers inoxydables austénitiques, l'adjonction d'hydrogène "aplatissant" le cordon en en diminuant le rapport pénétration/largeur et ovalisant cette pénétration.

Quoique la présente invention ait été décrite en relation avec des modes de réalisation particuliers, elle ne s'en trouve pas limitée mais est au contraire susceptible de modifications et de variantes qui apparaîtront à l'homme de l'art.

## Revendications

1. Mélange gazeux de protection pour le soudage à l'arc d'aciers inoxydables, **caractérisé en ce qu'**il comprend :
- de 3 à 10 % d'hélium,
- de 1 à 2 % de dioxyde de carbone
- de 1,3 à 2 % d'azote,
le solde étant l'argon.

2. Mélange gazeux selon la revendication 1 comprenant:
- 5 % d'hélium,
- 1,8 à 2 % de dioxyde de carbone,
- 1,5 à 1,7 % d'azote,
le solde étant de l'argon.

3. Mélange gazeux selon la revendication 1 ou la revendication 2, **caractérisé en ce qu'**il comporte en outre un faible pourcentage, n'excédant pas 2,5 %, d'hydrogène.

4. Procédé de soudage de pièce en acier inoxydable, comprenant les étapes de former un arc électrique entre une électrode consommable et la pièce, et de protéger l'arc par un mélange gazeux de protection, **caractérisé en ce que** le mélange gazeux de protection est conforme à l'une des revendications précédentes.

## Claims

1. Shielding gas mixture for the arc welding of stainless steels, **characterized in that** it comprises:
- from 3 to 10% of helium,
- from 1 to 2% of carbon dioxide,
- from 1.3 to 2% of nitrogen,
the balance being argon.

2. Gas mixture according to Claim 1, comprising
- 5% of helium,
- from 1.8 to 2% of carbon dioxide,
- from 1.5 to 1.7% of nitrogen,
the balance being argon.

3. Gas mixture according to Claim 1 or Claim 2, **characterized in that** it additionally comprises a small percentage, not exceeding 2.5%, of hydrogen.

4. Process for welding a stainless steel workpiece, comprising the steps of forming an electric arc between a consumable electrode and the workpiece and of protecting the arc with a shielding gas mixture, **characterized in that** the shielding gas mixture is in accordance with one of the preceding claims.

## Patentansprüche

1. Schutzgasgemisch zum Lichtbogenschweißen von rostfreien Stählen, **dadurch gekennzeichnet, daß** es
- 3 bis 16% Helium,
- 1 bis 2% Kohlendioxid,
- 1,3 bis 2% Stickstoff umfaßt,
wobei der Rest Argon ist.

2. Gasgemisch nach Anspruch 1, umfassend
- 5% Helium,
- 1,8 bis 2% Kohlendioxid,
- 1,3 bis 1,7% Stickstoff,
wobei der Rest Argon ist.

3. Gasgemisch nach Anspruch 1 oder 2, **dadurch gekennzeichnet, daß** es außerdem einen kleinen Anteil Wasserstoff, der 2,5% nicht überschreitet, enthält.

4. Verfahren zum Schweißen eines Werkstücks aus rostfreiem Stahl, umfassend die Schritte zur Erzeugung eines Lichtbogens zwischen einer sich verbrauchenden Elektrode and dem Werkstück and zum Schützen des Lichtbogens mittels eines Schutzgasgemisches, **gekennzeichnet durch** die Verwendung des Schutzgasgemisches nach einem der vorangehenden Ansprüche.
